# EUROPEAN PATENT APPLICATION

(11) **EP 1 614 457 A1**
(43) Date of publication of application: **11.01.2006**
(21) Application number: 03723125.5
(22) Date of filing: 16.04.2003
(51) Int. Cl.: B01D 53/02, B01D 39/18, A62D 9/00, B01J 20/24

(54) **METHOD FOR REMOVING HARMFUL SUBSTANCES AND FILTER FOR REMOVING HARMFUL SUBSTANCES**

(71) Applicant: Nissei Bio Co., Ltd., Sumida-ku, Tokyo 130-0026 (JP)
(72) Inventor: LIU, Xiang Dong, Sapporo-shi, Hokkaido 065-0012 (JP); MATSUNAGA, Masaji, Sumida-ku, Tokyo 130-0012 (JP); NISHI, Norio, Sapporo-shi, Hokkaido 007-0841 (JP)
(74) Representative: HOFFMANN EITLE
(86) International application number: PCT/JP2003/004817
(87) International publication number: WO 2004/091753

(57) **Abstract**

A method and a filter for efficiently removing harmful substances in ambient air or generated from tobacco, such as dioxins and pyrene, using DNA are provided.

Specifically, in the method, gas containing harmful substances is brought into contact with DNA to be trapped by the DNA, thereby being removed. The filter for removing harmful substances includes DNA and a supporter for supporting the DNA.

## Description

### Technical Field

The present invention relates to a method and a filter for efficiently removing, for example, dioxins in ambient air or harmful substances generated by smoking, by DNA trapping.

### Background Art

For removing harmful substances contributing to environmental pollution from the air, filters have generally been used which comprise a honeycomb; a porous ceramic; regenerated cellulose supported by glass fiber, metal fiber, or carbon fiber; an activated carbon grain, powder or fiber material made from wood pulp, sawdust, coconut husk, coal, phenol, synthetic fiber or other raw materials; or zeolite. It has been known that these materials are useful to some extent. As another technique for removing harmful substances, Japanese Unexamined Patent Application Publication No. 2002-355299 has disclosed an air-cleaning filter using a photocatalyst in which functional powder (titanium oxide, zinc oxide, iron oxide, etc.) exhibiting photocatalysis is supported by activated carbon fiber. Furthermore, Japanese Unexamined Patent Application Publication No. 2001-95552 has disclosed a tobacco smoke filter including a porous glass containing at least CaO, B₂O₃, SiO₂, and Al₂O₃.

There have recently been growing concerns about air pollution by dioxins and health impairment resulting from smoking, and accordingly, a method for removing dioxins in the air and harmful substances generated by smoking more efficiently than ever is increasingly desired. In use in air conditioners, fan heaters, air cleaners, electric vacuum cleaners, dryers, and other electrical or electronic appliances, the above-described filters have the effect of efficiently removing dust, but, disadvantageously, cannot remove dioxins effectively.

In view of these circumstances, the object of the present invention is to provide an effective method for removing chemical substance harmful to the human body, such as dioxins in the air and pyrene generated by smoking tobacco; a filter for removing the harmful substances; and a smoking utensil, a mask, and electrical and electronic apparatuses equipped with the filter.

### Disclosure of Invention

Specifically:

A first invention of the present application relates to a method for removing harmful substances in which the harmful substances are brought into contact with DNA to be trapped by the DNA, thereby being removed.

A second invention relates to a filter for removing harmful substances including DNA and fibrous filter material for supporting the DNA.

A third invention relates to the filter for removing harmful substances of the second invention, wherein the DNA is supported in a free state, among the fibers at least in the region of the fibrous filter material which a gas containing the harmful substances permeates.

A fourth invention relates to the filter for removing harmful substances of the third invention, wherein the DNA is in a fiber form or a film form.

A fifth invention relates to the filter for removing harmful substance of the second invention, wherein the DNA is supported in a form of a mixture with another macromolecular compound, at least in the region of the fibrous filter material which a gas containing the harmful substances permeates.

A sixth invention relates to the filter for removing harmful substances of the second invention, wherein the DNA is fixed to the fibrous filter material to be supported, at least in the region of the fibrous filter material which a gas containing the harmful substances permeates.

A seventh invention relates to the filter for removing harmful substances of the sixth invention, wherein the DNA is fixed to the fibrous filter material by ultraviolet light exposure.

A eighth invention relates to the filter for removing harmful substances of the sixth invention, wherein the DNA is fixed to the fibrous filter material or glass beads contained in the fibrous filter material by chemical bonding resulting from the formation of a Schiff base.

A ninth invention relates to the filter for removing harmful substances of the sixth invention, wherein the DNA is fixed to the fibrous filter material in a gel state or a porous form obtained by removing water from the gel.

A tenth invention relates to the filter for removing harmful substances of the ninth invention, wherein the gel is an acrylamide gel.

A eleventh invention relates to the filter for removing harmful substances of the sixth invention, wherein the DNA is fixed to the fibrous filter material by intercalating psoralen between the double strands of the DNA, the psoralen being bonded to the fibrous filter material with a spacer therebetween.

A twelfth invention relates to the filter for removing harmful substances of the sixth invention, wherein the DNA is fixed to the fibrous filter material by a coupling agent.

A thirteenth invention relates to a method for manufacturing a filter for removing harmful substances, comprising the steps of: impregnating a fibrous filter material with an aqueous solution of DNA; and subsequently removing water from the fibrous filter material, whereby the DNA is supported in a free state, among the fibers of the fibrous filter material.

A fourteenth invention relates to a method for manufacturing a filter for removing harmful substances, comprising the steps of: impregnating a fibrous filter material with an aqueous solution containing DNA and a mixture of the DNA and another macromolecular compound; and subsequently removing water from the fibrous filter material, whereby the DNA is supported by the fibrous filter material.

A fifteenth invention relates to a method for manufacturing a filter for removing harmful substances, comprising the steps of: impregnating a fibrous filter material with an aqueous solution of DNA; and subsequently exposing the fibrous filter material to ultraviolet light, whereby the DNA is fixed to the fibrous filter material.

A sixteenth invention relates to a method for manufacturing a filter for removing harmful substances, comprising the steps of: impregnating a fibrous filter material with an aqueous solution containing DNA and a mixture of the DNA and another macromolecular compound; and subsequently exposing the fibrous filter material to ultraviolet light, whereby the DNA is fixed to the fibrous filter material.

A seventeenth invention relates to a method for manufacturing a filter for removing harmful substances, comprising the step of fixing DNA to a fibrous filter material or glass beads contained in a fibrous filter material by chemical bonding resulting from the formation of a Schiff base.

A eighteenth invention relates to a method for manufacturing a filter for removing harmful substances, comprising the step of intercalating psoralen bonded to a fibrous filter material with a spacer therebetween, between the double strands of the DNA, thereby fixing the DNA to the fibrous filter material.

A nineteenth invention relates to a method for manufacturing a filter for removing harmful substances, comprising the steps of: impregnating a fibrous filter material with DNA in a sol state together with water and a gelling agent; and subsequently drying or freeze-drying the fibrous filter material to remove water, whereby the DNA is fixed to the fibrous filter material in a gel state or a porous form obtained by removing the water from the gel.

A twentieth invention relates to the method for removing the filter for removing harmful substances of the first invention, wherein the harmful substances are dioxins.

A twenty-first invention relates to a smoking utensil including any one of the filters for removing harmful substances of the second to twelfth inventions.

A twenty-second invention relates to a mask including any one of the filters for removing harmful substances of the second to twelfth inventions.

A twenty-third invention relates to a gas mask including any one of the filters for removing harmful substances of the second to twelfth inventions.

A twenty-fourth invention relates to a gas filter installed in a gas flow pass of an electrical or electronic apparatus using gas whose temperature or temperature and humidity are controlled. The gas filter includes any one of the filters for removing harmful substances of the second to twelfth inventions.

A twenty-fifth invention relates to an air filter installed in an air outlet, inlet, or flow pass of electrical or electronic apparatus from which, into which, or through which air or heated air flows. The air filter includes any one of the filters for removing harmful substances of the second to twelfth inventions.

A twenty-sixth invention relates to a filter apparatus for collecting or removing dust in an incinerator. The filter apparatus includes any one of the filters for removing harmful substances of the second to twelfth inventions.

### Brief Description of the Drawings

Fig. 1 is a representation of fibrous filter material in which DNA powder is dispersed;
Fig. 2 is a fragmentary enlarged view of Fig. 1;
Fig. 3 is a representation of a process for preparing a filter for removing harmful substances of the present invention by fixing DNA to cellulose fiber by chemical bonding resulting from the formation of a Schiff base;
Fig. 4 is a representation of a process for fixing DNA to glass beads by chemical bonding resulting from the formation of a Schiff base;
Fig. 5 is a representation of a filter for removing harmful substances of the present invention, in which the DNA-fixed glass beads prepared in the process shown in Fig. 4 are supported by a fibrous filter material;
Fig. 6 is a representation of psoralen bonded to a fibrous filter material with a spacer therebetween;
Fig. 7 is a schematic illustration of a filter using psoralen for removing harmful substances of the present invention;
Fig. 8 is a representation of a fibrous filter material impregnated with a DNA aqueous solution;
Fig. 9(a) is a perspective view of a cigarette equipped with a filter for removing harmful substances of the present invention, and Fig. 9(b) is a sectional view taken along line A-A in (a);
Fig. 10(a) is a perspective view of a cigarette holder equipped with a filter for removing harmful substances of the present invention, and Fig. 10(b) is a sectional view taken along line B-B in (a);
Fig. 11(a) is a fragmentary exploded view of a mask equipped with a filter for removing harmful substances of the present invention, and Fig. 11(b) is a side view of the mask;
Fig. 12(a) is a perspective view of an air conditioner equipped with a filter for removing harmful substances of the present invention, and Fig. 12(b) is a perspective view of a filter of the present invention installed in the air conditioner; and
Fig. 13 is a perspective view of a gas mask equipped with a filter for removing harmful substances of the present invention.

### Best Mode for Carrying Out the Invention

DNA used in the present invention comprises two helical polynucleotide strands (double helices). Preferably, it is obtained from testes of fish, such as salmon, herring, or cod, or from thymus glands of mammals or birds, such as cow, pig, or chicken. In the double strand DNA, pairs of planar bases with structural complementation protrude perpendicular to the axis of the helices from the sugar-phosphate skeletons of both the polynucleotide strands to the center of the helices, and each pair of bases are hydrogen-bonded. The double strand DNA has spaces between the base pairs, and, in the case of B-form DNA, the spaces measure about 1.1 nm in width by 0.34 nm in height. Planar small molecules can be trapped in the spaces. This is referred to as intercalation. This phenomenon can be promoted due to the electric charge or hydrophobicity of the small molecules. Many substances harmful to the human body, such as dioxins, comprise a plurality of benzene rings and, thus, have a planar structure. Accordingly, the inventors of the present invention found that dioxins in ambient air or harmful substances generated by smoking tobacco can be removed more efficiently by utilizing DNA.

A method for removing harmful substances of the present invention involves the use of the above-described characteristics of DNA. In the method, gas containing harmful substances such as dioxins brings into contact with DNA to be trapped by the DNA, thereby being removed. Also, the present invention relates to a filter for removing harmful substances, including DNA and a fibrous filter material capable of supporting the DNA. The fibrous filter material used in the present invention refers to an aggregation of fibers. However, it is not necessarily limited to fiber, and any material may be used as long as it is similar to fiber in form, and capable of supporting DNA and allowing gas containing harmful substances to permeate therethrough. Preferably, it may be cellulose fiber, such as paper; glass fiber; natural fiber; synthetic fiber, such as polyethylene, polypropylene, or nylon resin; or honeycomb.

The filter for removing harmful substances of the present invention can produce the effect of sufficiently removing harmful substance as long as DNA is supported among the fibers at least in the region of the fibrous filter material which gas containing the harmful substances permeates, in such a free state that the DNA can freely move among the fibers. However, the DNA may be supported over the entire fibrous filter material. In the present invention, the DNA supported by the fibrous filter material means that the DNA is present in such a state that the DNA does not fall off from the fibrous filter material. The form of the DNA is not particularly limited, but the DNA may be of powder, fiber, or film.

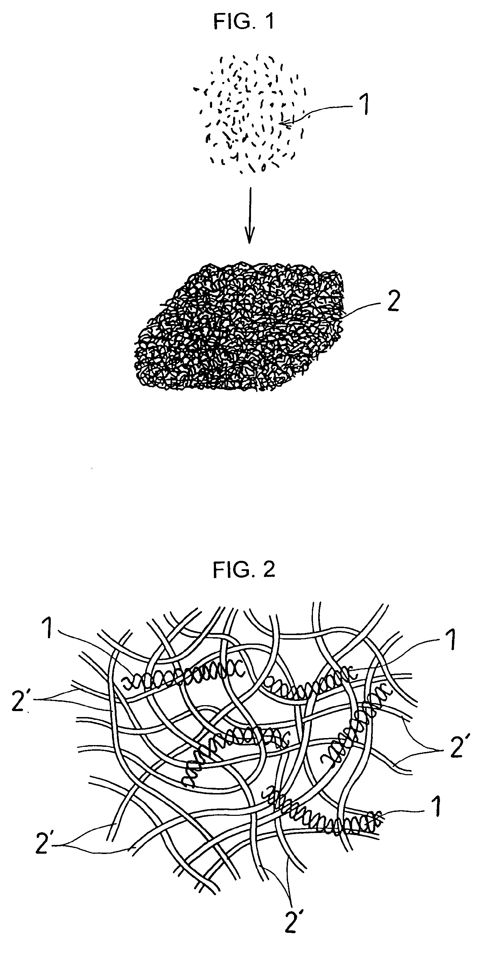

The manner for supporting the DNA in a free state among the fibers of the filter material is not particularly limited, and various forms may be applied. For example, as shown in Fig. 1, a predetermined amount of DNA 1 prepared by being extracted from animal tissues, purified, and freeze-dried into a powder, fiber, or film form is directly and uniformly dispersed in or dredged over the fibrous filter material 2 to come into contact, thereby being supported among the fibers of the fibrous filter material 2. Thus, the DNA 1 supported by the fibrous filter material 2 is held among the fibers 2' of the fibrous filter material 2, without falling from among the fibers, as shown in Fig. 2, which is a fragmentary enlarged view of Fig. 1.

In the filter for removing harmful substance, preferably, the DNA is supported in a form of mixture with another macromolecular compound, at least in the region of the fibrous filter material which gas containing the harmful substances permeates. By combination with another macromolecular compound, the DNA can be more firmly supported by the fibrous filter material after removing water, in comparison with being used alone. Consequently, the possibility that the DNA falls off from the fibrous filter material is reduced and, thus, the filter for removing harmful substances exhibits a stable effect of removing harmful substances even in long-term use. Any macromolecular compound may be used, as long as it does not affect the effect of removing harmful substances and is capable of being mixed with the DNA and of adhering to the fibrous filter material by one or both of a physical force, such as intermolecular force or electrostatic force, and a chemical bonding, such as covalent binding, ionic bonding, or coordination bonding. Exemplary macromolecular compounds include: acrylates, such as sodium polyacrylate and sodium polymethacrylate; and celluloses, such as methylcellulose, carboxymethylcellulose, and their salts.

It is also preferable that, in the filter for removing harmful substances of the present invention, the DNA be fixed to the fibrous filter material to be supported, at least in the region of the fibrous filter material which gas containing the harmful substances permeates. Since the DNA is more firmly secured to the fibrous filter material in this structure, the DNA does not easily fall from the fibrous filter material. Consequently, the filter for removing harmful substances of the present invention hardly reduces the effect of removing harmful substances due to the falling of the DNA, even if the filter is used for a long time.

For one of the variations of the filter for removing harmful substances in which the DNA is fixed to the fibrous filter material, the DNA is fixed to the fibrous filter material by ultraviolet light exposure. In this variation, preferably, the ultraviolet light radiated to the DNA has a wavelength in the range of 250 to 270 nm.

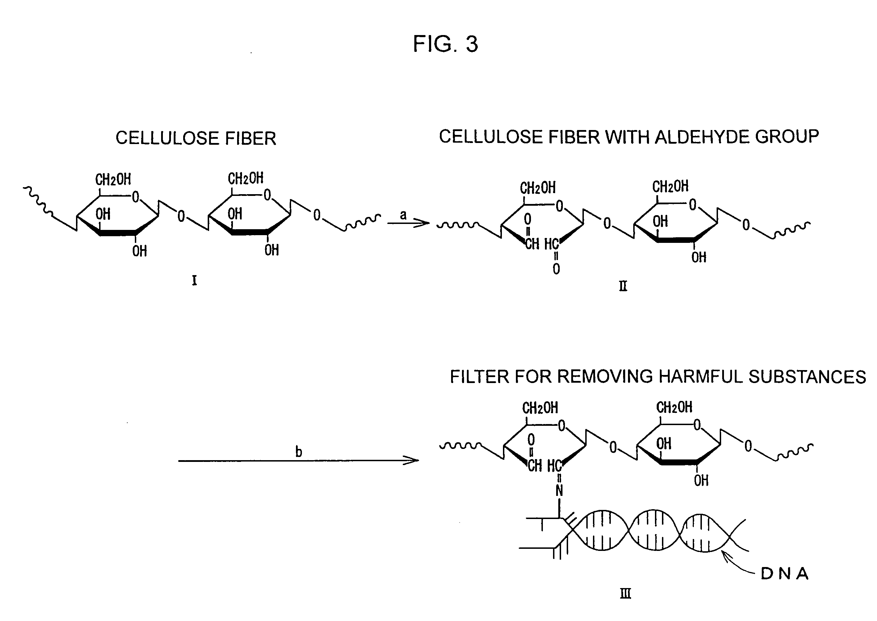

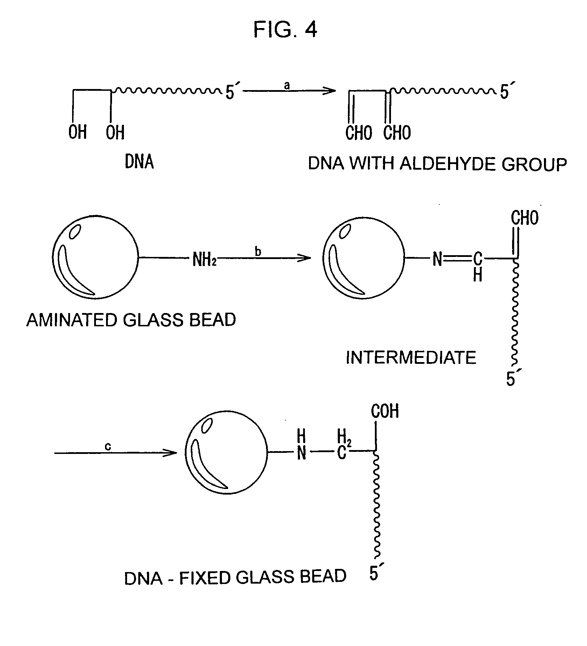

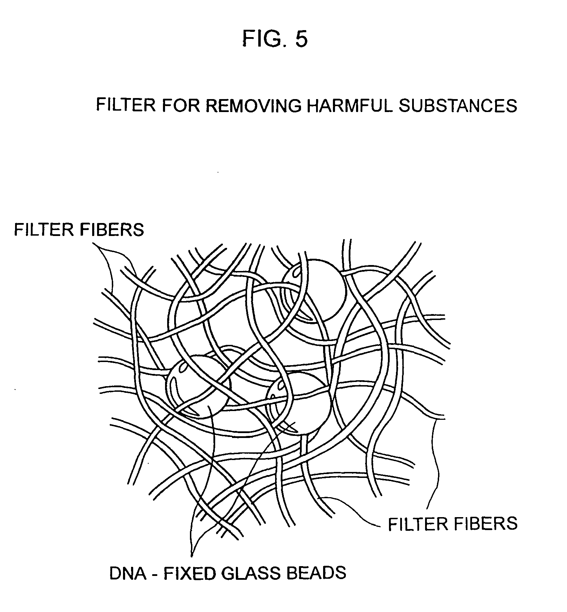

Alternatively, in the filter for removing harmful substances, the DNA may be fixed to the fibrous filter material by chemical bonding resulting from the formation of a Schiff base. For example, the DNA is fixed to a cellulose fiber being the fibrous filter material to obtain the filter for removing harmful substances, as shown in Fig. 3. Specifically, (a) NalO₄ is allowed to act on the cellulose fiber (I) at 25°C for 1 hour to produced cellulose fiber (II) in which part of the cellulose molecule has an aldehyde group; and then, (b) 5 mg/mL of DNA is added to react at 80°C for 8 hours. Thus, a filter (III) for removing harmful substances in which the DNA is fixed to the cellulose fiber is obtained. As another variation of the filter for removing harmful substances in which the DNA is fixed by chemical bonding resulting from the formation of a Schiff base, the DNA may be previously fixed to the surfaces of glass beads by chemical bonding resulting from the formation of a Schiff base, and the glass beads are supported by the fibrous filter material. In a process for fixing the DNA to the glass beads, (a) NalO₄ is allowed to act on the DNA at 25°C for 3 hours to produce DNA with an aldehyde group; then, (b) the DNA with the aldehyde group is allowed to react with aminated glass beads at 25°C for 3 hours; and (c) NaBH₃CN is added to the resulting intermediate to react for 6 hours, as shown in Fig. 4. The resulting glass beads to which the DNA is fixed are supported among the fibers of the fibrous filter material, as shown in Fig. 5, for example, in a free state. Thus, the filter for removing harmful substances of the present invention is structured.

For another variation of the filter for removing harmful substances in which the DNA is fixed to the fibrous filter material, the DNA is fixed to the fibrous filter material, in a gel state or a porous form obtained by removing water from the gel. For preparing the filter, the fibrous filter material is immersed in a DNA aqueous solution, and a dispersant such as sodium polyacrylate is added to the solution to form a gel. Then, the fibrous filter material is drawn up, or after drawing up, water is removed from the gel adhered to the fibrous filter material to obtain a porous form. Alternatively, the DNA may be compounded with water and a gelling agent, such as acrylamide or silica gel, to form a sol, and the fibrous filter material is immersed in, or coated or sprayed with the sol. The sol is dried or freeze-dried to obtain a gel, or, furthermore, water is removed from the resulting gel to obtain a porous form. Gelatin, agar-agar, and the like may be used as the gelling agent.

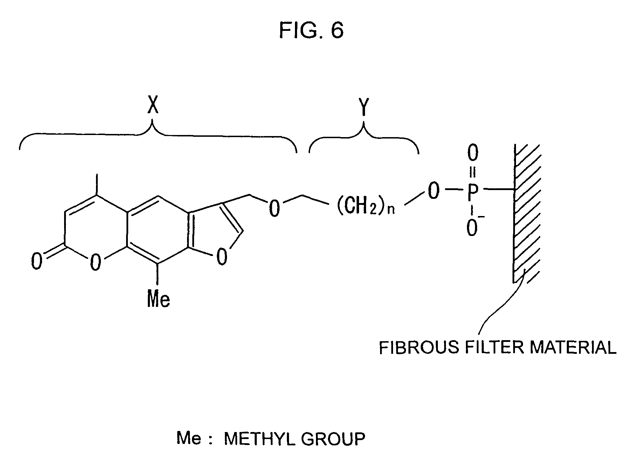

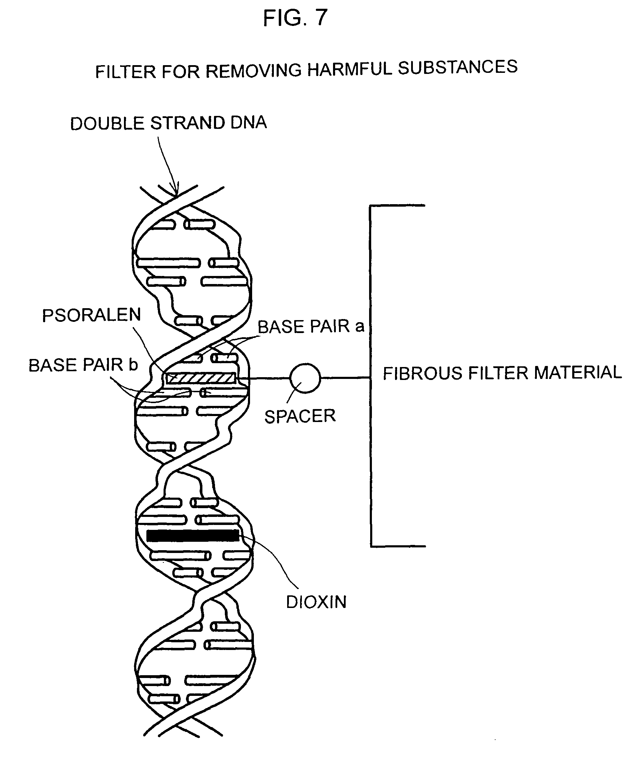

In a more preferred variation of the filter for removing harmful substances in which the DNA is fixed to the fibrous filter material, the DNA is fixed to the fibrous filter material by intercalating psoralen bonded to the fibrous filter material between the double strands of the DNA. For example, as shown in Fig. 6, psoralen (portion designated by X) is bonded to a polyalkylene group (portion designated by Y, n represents an integer of 1 or more), and the polyalkylene is further bonded to a fibrous filter material at least part of which is phosphorylated. The psoralen with this structure is intercalated in DNA to be trapped. In this variation, since the psoralen has a planar structure, the psoralen is trapped in the DNA by being intercalated into the space between a base pair a and another base pair b of the double strand DNA, as shown in Fig. 7. Consequently, the DNA is fixed to the fibrous filter material with the polyalkylene serving as the spacer therebetween. In this instance, by radiating ultraviolet light, the DNA can be firmly fixed to the psoralen. Also, visible light may be replaced with ultraviolet light to fix the DNA to the psoralen. Use of visible light is different from that of ultraviolet light in that the DNA can be firmly fixed to psoralen even if the DNA is not dried, for example, even in water. Hence, fixing conditions are not relatively limited in comparison with the case of ultraviolet light. In the filter using psoralen of the present invention, harmful substances, such as dioxins, are trapped in some of the spaces between the DNA base pairs other than the space in which psoralen is intercalated, as shown in Fig. 7. The spacer used in this variation may be a polyethylene glycol group instead of the polyalkylene group.

In the filter for removing harmful substances of the present invention, the DNA may be fixed to the fibrous filter material by a coupling agent. For this type of filter for removing harmful substances, the DNA is mixed with silica gel, a silane coupling agent, and, if necessary, another additive to prepare an aqueous solution or a suspension. A supporter is immersed in the aqueous solution or the suspension or the fibrous filter material is coated or sprayed with the aqueous solution or the suspension so as to be impregnated with the aqueous solution or the suspension, and then water is removed. This form of variation is particularly advantageous for cases in which the DNA, being an organic material, is more firmly fixed to an inorganic fibrous filter material. A preferred coupling agent is, for example, a silane coupling agent.

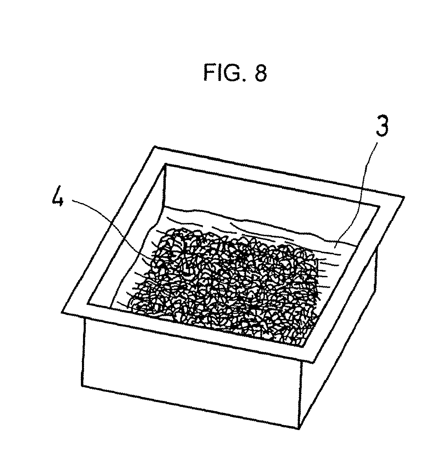

The filter for removing harmful substances may be prepared by impregnating a fibrous filter material with a DNA aqueous solution, and subsequently removing water from the fibrous filter material. Thus, the DNA is supported in a free state, among the fibers of the fibrous filter material. For example, the fibrous filter material is coated with a DNA aqueous solution with a brush or the like and subsequently dried in hot air or with a heater, preferably at 60°C or less to yield the filter for removing harmful substances. Alternatively, as shown in Fig. 8, a fibrous filter material 4 is immersed in an aqueous solution 3 of a suitable concentration of DNA, and then the fibrous filter material 4 drawn up from the DNA aqueous solution 3 is dried at a temperature of 60°C or less, which does not cause the thermal denaturation of the DNA.

In addition, for the filter for removing harmful substances, after being impregnated with the DNA aqueous solution, or after being impregnated with a solution containing DNA and a mixture of the DNA and another macromolecular compound, the fibrous filter material may be exposed to ultraviolet light so that the DNA is fixed to the fibrous filter material.

Various types of harmful substances can be involved in the present invention. However, since the present invention utilizes intercalation into DNA, the present invention can particularly advantageously treat organic compounds having a planer structure, such as those having an aromatic ring. In particular, it is extremely advantageous for the present invention to treat dioxins, such as dibenzo-p-dioxin (DD), dibenzofuran (DF), biphenyl (BP), polychlorinated dibenzo-p-dioxins (PCDDs), polychlorinated dibenzofurans (PCDFs), and coplannar PCB.

The filter for removing harmful substances of the present invention can preferably be incorporated in or with various products including: smoking utensils, such as cigarettes and cigarette filters; masks; gas masks; filter apparatuses for collecting or removing dust in an incinerator; funnels; car mufflers; and minus ion generators. In addition, it can be preferably used for a gas filter installed in a flow pass of an electrical or electronic apparatus using gas whose temperature or temperature and humidity are controlled. Exemplary electrical or electronic apparatuses using gas whose temperature or temperature and humidity are controlled include air conditioners, fan heaters, and humidifiers. The gas filter installed in such an electrical or electronic apparatus is disposed between the position where the temperature or the temperature and humidity of the gas taken in the apparatus are controlled and the position from which the gas is discharged. For example, for an air conditioner, the gas filter is disposed in a position from which the gas whose temperature is set at a predetermined point in the inside of the air conditioner is discharged. The gas filter includes a filter, so that dust contained in the gas passing through the gas filter is removed and, thus, clean gas is discharged from the apparatus to the outside. The filter for removing harmful substances of the present invention may also be used for an air filter installed in an air outlet, inlet, or flow pass of an electrical or electronic apparatus from which, into which, or through which air or heated air flows. Coolers, air cooling, and such electrical or electronic apparatuses include air cleaners, electric vacuum cleaners, driers, and coolers for car engines. The air filter installed in these apparatuses includes a filter. Air or heated air taken in the apparatus is filtered during passing through the air filter to remove dust and foreign particles. For example, in an electric vacuum cleaner, the air filter is disposed between the position into which air is drawn with dust and foreign particles and the position from which the air is discharged. Thus, the dust and foreign particles contained in air are removed by the filter during passing through the air filter.

As described above, the filter for removing harmful substances of the present invention includes DNA supported by a fibrous filter material. The amount of the supported DNA is appropriately determined according to the concentration of existing harmful substances. For example, dioxins are present on the order of 10⁻¹² g/m3 in ambient air. Accordingly, for sufficient removal of dioxins, the DNA is supported by the fibrous filter material in an amount of the order of at least 10⁻⁹ grams per volume (m³) of the region which air containing harmful substances permeates.

The filter for removing harmful substance of the present invention may contain various additives, such as a colorant and a deodorant, if necessary, in addition to the DNA and fibrous filter material.

The present invention will be further illustrated in detail using the following embodiments. However, these embodiments do not limit the invention.

### EMBODIMENT 1

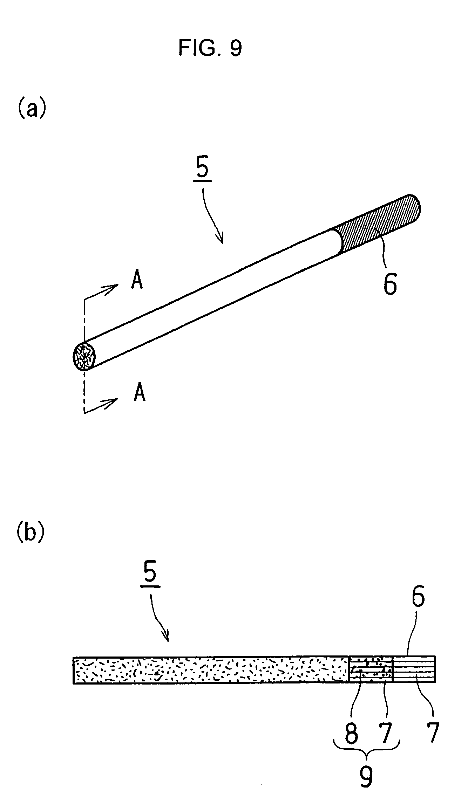

Figs. 9(a) and 9(b) show a cigarette using the filter for removing harmful substances of the present invention. Fig. 9(a) is a perspective view of a cigarette 5, and Fig. 9(b) is a sectional view taken along line A-A in (a). The cigarette 5 includes a mouth end 6 including a chemical or natural fiber layer 7, and a harmful substance-removing filter 9 adjoining the mouth end 6. In the harmful substance-removing filter 9, DNA 8 is supported in a free state by the chemical or natural fiber layer 7. By the presence of the harmful substance-removing filter 9, harmful substances generated by smoking tobacco, such as naphthalene, are efficiently trapped by the DNA 8. Thus, the harmful substances are reduced before being absorbed by the human body. This is very favorable for health maintenance. Furthermore, the harmful substance-removing filter 9 does not reduce the distinctive flavor of tobacco much, and accordingly the quality of tobacco for articles of taste is not negatively affected.

### EMBODIMENT 2

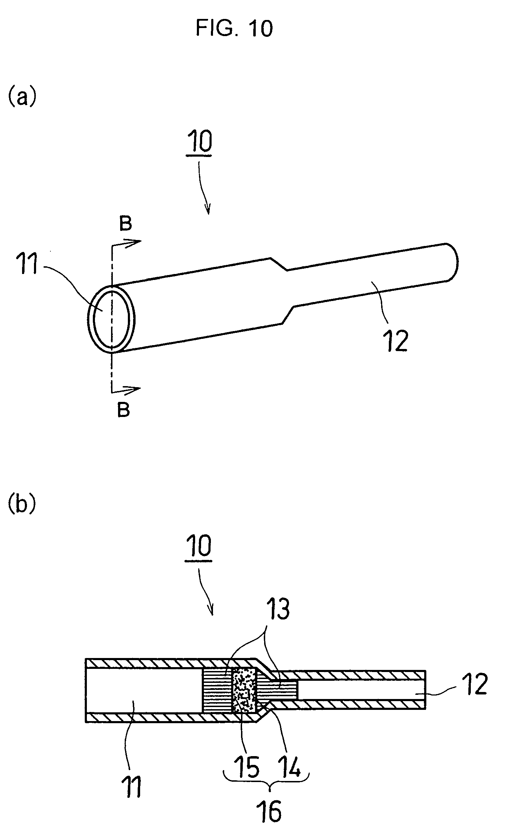

Figs. 10(a) and 10(b) show a cigarette holder using the filter for removing harmful substances of the present invention. Fig. 10(a) is a perspective view of a cigarette holder 10, and Fig. 10(b) is a sectional view taken along line B-B in (a). The cigarette holder 10 has a cigarette hole 11 and a mouth end 12. In the cigarette holder 10, a harmful substance-removing filter 16 is disposed in the inside and which includes two chemical or natural fiber layers 13, and another chemical or natural fiber layer 14 and powder DNA 15 supported in a free state by the chemical or natural fiber layer 14 that are disposed between the two chemical or natural fiber layers 13. By putting the harmful substance-removing filter 16 in the cigarette hole 11, the DNA 15 supported by the harmful substance-removing filter 16 efficiently traps harmful substances generated by smoking, such as naphthalene. Thus, the harmful substances are reduced before being absorbed by the human body. This is favorable for health maintenance.

### EMBODIMENT 3

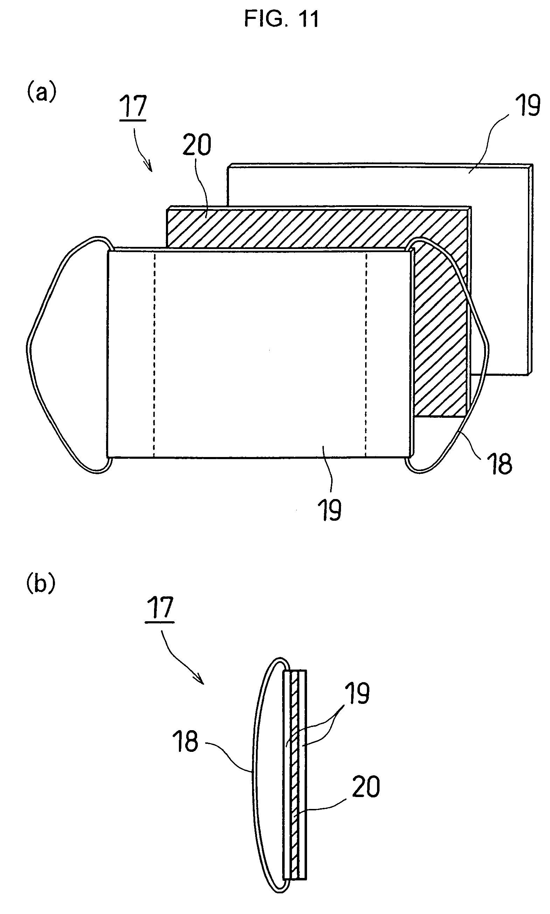

Figs. 11 (a) and 11 (b) show a mask using the filter for removing harmful substances of the present invention as gauze. Fig. 11 (a) is an exploded perspective view of a mask 17, and Fig. 11 (b) is a side view of the mask 17. The mask 17 includes ear strings 18, two pieces of gauze 19, and a harmful substance-removing gauze 20 disposed between the two pieces of gauze 19 and serving as the filter for removing harmful substances of the present invention. The harmful substance-removing gauze 20 includes a piece of gauze made of the same material as that of the gauze 19 to which DNA is fixed by ultraviolet light exposure. By wearing the mask 17 on the road, pollen liable to cause allergic episodes is prevented from being absorbed by the human body. Furthermore, the DNA supported by the harmful substance-removing gauze 20 extremely advantageously traps harmful substances suspended in outside air, such as dioxins, to favorably prevent the absorption of the harmful substances by the human body.

### EMBODIMENT 4

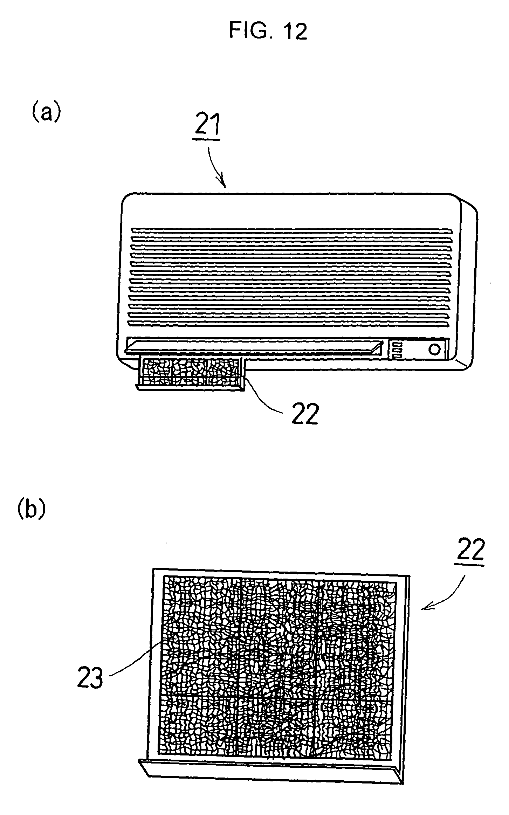

Fig. 12(a) shows an air conditioner using the filter for removing harmful substances of the present invention as the air filter. Fig. 12(a) is a perspective view of an air conditioner 21, and Fig. 12(b) is a perspective view of a harmful substance-removing filter 22 used in the air conditioner 21. The harmful substance-removing filter 22 includes a conventionally used air conditioner filter supporting DNA 23 by a silane coupling agent. By using the air conditioner 21, dust and the like suspended indoors are trapped by the harmful substance-removing filter 22, and, furthermore, harmful substances coming from the outside of the room, such as dioxins, can be removed by the harmful substance-removing filter 22. Thus, room air can be maintained clean.

### EMBODIMENT 5

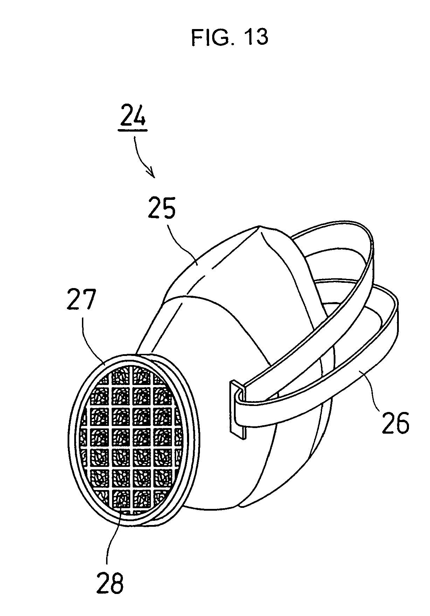

Fig. 13 is a perspective view of a gas mask 24, which is one of the gas masks using the filter for removing harmful substances of the present invention. The gas mask 24 includes a mask face 25, a headband 26, a filter case frame 27, and a harmful substance-removing filter 28 housed in the filter case frame 27. The harmful substance-removing filter 28 includes DNA supported by a HEPA (high-efficiency particulate air) filter by ultraviolet light exposure. By supporting the DNA by the HEPA filter, which highly efficiently traps particles, the effect of removing harmful substances is further enhanced. For example, in a fire location where toxic gas easily fills, the toxic gas is advantageously prevented from being absorbed by the human body by wearing the gas mask 24.

In order to examine how efficiently the harmful substance-removing filer removes harmful substances, the following tests were conducted.

### TEST EXAMPLE 1

An experiment was performed on cigarettes having the harmful substance-removing filter of the present invention and a known filter to examine their effects of removing harmful substances generated by smoking.

### (i) Preparation of Cigarettes

Preparation 1: A fibrous filter layer of the known cigarette was immersed in a 10% by weight solution of DNA and sodium polyacrylate for 10 seconds, and, after being drawn up, the filter layer was dried at 40°C. The resulting harmful substance-removing filter was used as the filter of a cigarette to yield Research Cigarette 2R4F (trade name, Kentucky Unv., U.S.) cigarette A.
Preparation 2: A fibrous filter layer of the known cigarette was immersed in a 10% by weight solution of DNA and sodium polyacrylate for 10 seconds, and, after being drawn up, the filter layer was dried at 40°C. The resulting harmful substance-removing filter was used as the filter of a cigarette in combination with activated carbon to yield Research Cigarette 2R4F (trade name, Kentucky Unv., U.S.) cigarette B.
Preparation 3: Only a fibrous filter layer of a known cigarette was used as the filter for a cigarette to yield Research Cigarette 2R4F (trade name, Kentucky Unv., U.S.) C.
Preparation 4: A fibrous filter layer of a known cigarette and activated carbon were used for the filter of a cigarette to yield Research Cigarette 2R4F (trade name, Kentucky Unv., U.S.) D.

### (ii) Smoking manner

A puff of 35 mL of the mainstream smoke from each of cigarettes A, B, C, and D obtained in above preparations was taken for 2 seconds, and this puff was performed on 20 cigarettes per day, 10 times in total. The masses of chemical substances contained in the entirety of the discharged gas were measured. The results are shown in Table 1.

**Table 1 (Unit: ng/UNK)**

| Chemical substance | A | B | C | D |
|---|---|---|---|---|
| Naphthalene | 36 | 25 | 95 | 53 |
| Acenaphthylene | 7.8 | 7.1 | 24 | 12 |
| Acenaphthene | 2.5 | 2.3 | 4.7 | 3.9 |
| 9H-fluorene | 7.4 | 6.9 | 15 | 13 |
| Phenanthrene | 4.6 | 4.2 | 9.5 | 8.1 |
| Anthracene | 1.9 | 2 | 3.9 | 2.9 |
| Fluoranthene | 1.9 | 1.6 | 3.8 | 3.2 |
| Pyrene | 2 | 1.5 | 3.8 | 3 |
| Benzo [a] anthracene | 0.46 | 0.38 | 0.9 | 0.93 |
| Chrysene^{*1} | 0.53 | 0.53 | 1.1 | 1.1 |
| Benzo [b] fluoranthene | 0.25 | 0.24 | 0.46 | 0.48 |
| Benzo [k] fluoranthene^{*2} | 0.069 | 0.066 | 0.18 | 0.14 |
| Benzo [a] pyrene | 0.2 | 0.16 | 0.45 | 0.4 |
| Indeno [1,2,3-c,d] pyrene | 0.13 | 0.11 | 0.25 | 0.22 |
| Benzo [g,h,i] perylene | 0.14 | 0.089 | 0.29 | 0.18 |
| Dibenzo [a,h] anthracene^{*3} | 0.014 | 0.011 | 0.025 | 0.026 |
| ^{*1}: including triphenylene, ^{*2}: including benzo [i] fluoranthene, ^{*3}: including dibenzo [a,c] anthracene | | | | |

Table 1 shows that cigarette A using the harmful substance-removing filter of the present invention exhibited an effect of removing chemical substances superior to that of cigarettes C and D using the known cigarette fibrous filter layer, for all the chemical substances listed in Table 1. In addition, it has been shown that cigarette B using the harmful substance-removing filter in combination with activated carbon exhibits an effect of removing chemical substances still superior to that of cigarette A.

### TEST EXAMPLE 2

In this test example, an experiment was performed on the filter for removing harmful substances of the present invention to examine the effect of removing dioxins, specifically polychlorinated dibenzo-p-dioxin (PCDD_{S}), polychlorinated dibenzofuran (PCDF5), and coplannar PCB, in ambient air.

### (i) Preparation of air filters

Over the entire area of a commercially available air filter (20 cm in length by 30 cm in width), 1000 mg of powder DNA was uniformly sprayed. Then the air filter was exposed to ultraviolet light with a wavelength of 260 nm to support the DNA by the air filter. Thus a harmful substance-removing filter of the present invention was prepared.

### (ii) Measuring Process

In a city T, an air cleaner equipped with the harmful substance-removing filter obtained in (i) was operated to collect air discharged from the air cleaner. The concentrations of dioxins contained in the discharged air were measured. The measurement of dioxins was performed in accordance with "Manual on Determination of Dioxins in Ambient Air" (June 2000, by Air Quality Management Division, Environmental Management Bureau, Environment Agency, Japan). Table 2 shows the toxicity equivalency quantities of dioxins in ambient air before and after passing through the air cleaner, that is, through the filter of the present invention installed in the air cleaner.

**Table 2**

| | Toxicity equivalency quantities of dioxins (pg TEQ/m³) |
|---|---|
| Before passing through the filter | 0.28 |
| After passing through the filter | 0.03 |

Table 2 shows that the toxicity equivalency quantity of dioxins in ambient air after passing through the harmful substance-removing filter of the present invention is reduced to one-tenth that before passing through the filter, and that the harmful substance-removing filter of the present invention has an extremely excellent effect of trapping and removing dioxins.

### Industrial Applicability

A method and a filter for efficiently removing harmful substances in ambient air or generated from tobacco, such as dioxins, using DNA are provided. The filter is advantageously used in, for example, smoking utensils, such as cigarettes and cigarette filter; masks; gas masks; gas filters installed in electrical or electronic apparatuses using gas whose temperature or temperature and humidity are controlled, such as air conditioners, fan heaters, and humidifiers; air filters installed in electrical or electronic apparatuses from which, into which, or through which air flows, such as electric vacuum cleaners, driers, and air cleaners; minus ion generators; filter apparatuses for collecting or removing dust in an incinerator; funnels; car mufflers; and so on.

## Claims

1. A method for removing harmful substances, wherein the harmful substances are brought into contact with DNA to be trapped by the DNA, thereby being removed.

2. A filter for removing harmful substances comprising DNA and fibrous filter material for supporting the DNA.

3. A filter for removing harmful substances according to Claim 2, wherein the DNA is supported in a free state, among the fibers at least in the region of the fibrous filter material which a gas containing the harmful substances permeates.

4. A filter for removing harmful substances according to Claim 3, wherein the DNA is in a fiber form or a film form.

5. A filter for removing harmful substance according to Claim 2, wherein the DNA is supported in a form of a mixture with another macromolecular compound, at least in the region of the fibrous filter material which a gas containing the harmful substances permeates.

6. A filter for removing harmful substances according to Claim 2, wherein the DNA is fixed to the fibrous filter material to be supported, at least in the region of the fibrous filter material which a gas containing the harmful substances permeates.

7. A filter for removing harmful substances according to Claim 6, wherein the DNA is fixed to the fibrous filter material by ultraviolet light exposure.

8. A filter for removing harmful substances according to Claim 6, wherein the DNA is fixed to the fibrous filter material or glass beads contained in the fibrous filter material by chemical bonding resulting from the formation of a Schiff base.

9. A filter for removing harmful substances according to Claim 6, wherein the DNA is fixed to the fibrous filter material in a gel state or a porous form obtained by removing water from the gel.

10. A filter for removing harmful substances according to Claim 9, wherein the gel is an acrylamide gel.

11. A filter for removing harmful substances according to Claim 6, wherein the DNA is fixed to the fibrous filter material by intercalating psoralen between the double strands of the DNA, the psoralen being bonded to the fibrous filter material with a spacer therebetween.

12. A filter for removing harmful substances according to Claim 6, wherein the DNA is fixed to the fibrous filter material by a coupling agent.

13. A method for manufacturing a filter for removing harmful substances, comprising the steps of: impregnating a fibrous filter material with an aqueous solution of DNA; and subsequently removing water from the fibrous filter material, whereby the DNA is supported in a free state, among the fibers of the fibrous filter material.

14. A method for manufacturing a filter for removing harmful substances, comprising the steps of: impregnating a fibrous filter material with an aqueous solution containing DNA and a mixture of the DNA and another macromolecular compound; and subsequently removing water from the fibrous filter material, whereby the DNA is supported by the fibrous filter material.

15. A method for manufacturing a filter for removing harmful substances, comprising the steps of: impregnating a fibrous filter material with an aqueous solution of DNA; and subsequently exposing the fibrous filter material to ultraviolet light, whereby the DNA is fixed to the fibrous filter material.

16. A method for manufacturing a filter for removing harmful substances, comprising the steps of: impregnating a fibrous filter material with an aqueous solution containing DNA and a mixture of the DNA and another macromolecular compound; and subsequently exposing the fibrous filter material to ultraviolet light, whereby the DNA is fixed to the fibrous filter material.

17. A method for manufacturing a filter for removing harmful substances, comprising the step of fixing DNA to a fibrous filter material or glass beads contained in a fibrous filter material by chemical bonding resulting from the formation of a Schiff base.

18. A method for manufacturing a filter for removing harmful substances, comprising the step of intercalating psoralen bonded to a fibrous filter material with a spacer therebetween, between the double strands of the DNA, thereby fixing the DNA to the fibrous filter material.

19. A method for manufacturing a filter for removing harmful substances, comprising the steps of: impregnating a fibrous filter material with DNA in a sol state together with water and a gelling agent; and subsequently drying or freeze-drying the fibrous filter material to remove water, whereby the DNA is fixed to the fibrous filter material in a gel state or a porous form obtained by removing the water from the gel.

20. A method for removing harmful substances according to Claim 1, wherein the harmful substances are dioxins.

21. A smoking utensil including a filter for removing harmful substances as set forth in any one of Claims 2 to 12.

22. A mask including a filter for removing harmful substances as set forth in any one of Claims 2 to 12.

23. A gas mask including a filter for removing harmful substances as set forth in any one of Claims 2 to 12.

24. A gas filter installed in a gas flow pass of an electrical or electronic apparatus using gas whose temperature or temperature and humidity are controlled, the gas filter including a filter for removing harmful substances as set forth in any one of Claims 2 to 12.

25. An air filter installed in an air outlet, inlet, or flow pass of electrical or electronic apparatus from which or into which air or heated air flows, the air filter including a filter for removing harmful substances as set forth in any one of Claims 2 to 12.

26. A filter apparatus for collecting or removing dust in an incinerator, the filter apparatus including a filter for removing harmful substances as set forth in any one of Claims 2 to 12.
